# EUROPEAN PATENT SPECIFICATION

(11) **EP 3 657 732 B1**
(45) Date of publication and mention of the grant of the patent: **22.02.2023**
(21) Application number: 18869250.3
(22) Date of filing: 08.10.2018
(51) Int. Cl.: H04L 41/0226, H04L 12/28, H04L 67/125, H04W 4/70, H04L 67/565, H04W 4/80

(54) **ELECTRONIC DEVICE CONTROL SYSTEM FOR CONTROLLING ELECTRONIC DEVICE, AND METHOD FOR CONTROLLING ELECTRONIC DEVICE**
SYSTEM ZUR STEUERUNG ELEKTRONISCHER VORRICHTUNGEN FÜR DIE STEUERUNG EINER ELEKTRONISCHEN VORRICHTUNG UND VERFAHREN ZUR STEUERUNG EINER ELEKTRONISCHEN VORRICHTUNG
SYSTÈME DE COMMANDE DE DISPOSITIF ÉLECTRONIQUE POUR COMMANDER UN DISPOSITIF ÉLECTRONIQUE, ET PROCÉDÉ DE COMMANDE DE DISPOSITIF ÉLECTRONIQUE

(30) Priority: 18.10.2017 KR 20170135415
(43) Date of publication of application: 27.05.2020
(73) Proprietor: Samsung Electronics Co., Ltd., Suwon-si, Gyeonggi-do 16677 (KR)
(72) Inventor: KO, Young-min, Suwon-si, Gyeonggi-do, 16677 (KR); KIM, Ki-hyun, Suwon-si, Gyeonggi-do, 16677 (KR); BAE, Seok-min, Suwon-si, Gyeonggi-do, 16677 (KR); YEON, Jung-mo, Suwon-si, Gyeonggi-do, 16677 (KR); OCK, Hyun-woo, Suwon-si, Gyeonggi-do, 16677 (KR); IM, Sung-bin, Suwon-si, Gyeonggi-do, 16677 (KR); HA, Tae-hoon, Suwon-si, Gyeonggi-do, 16677 (KR)
(74) Representative: Gulde & Partner
(86) International application number: PCT/KR2018/011814
(87) International publication number: WO 2019/078527

(56) References cited:
- EP-A2- 1 933 287
- WO-A1-2017/091021
- JP-A- 2012 222 687
- KR-A- 20150 051 514
- KR-A- 20170 060 598
- KR-B1- 101 532 369
- US-A1- 2004 139 210
- US-A1- 2017 242 557
- US-A1- 2017 242 557
- US-A1- 2017 279 894
- US-B2- 9 736 525

## Description

### [Technical Field]

The disclosure relates to an electronic device control system for controlling an electronic device and a method for controlling the electronic device, and more particularly, to an electronic device control system that is capable of controlling a plurality of electronic devices and a method for controlling the electronic device.

### [Background Art]

With the development of semiconductor technologies and wireless communication technologies, various kinds of electronic devices are being developed. In particular, recently, an Internet of Things (IoT) technology which is a technology that enables transmission and reception of data between things in real time has been developed. Such an Internet of Things is an evolved form of a conventional ubiquitous sensor network (USN) or machine to machine (M2M), and is characterized in connecting things with communication functions installed thereon to a network and enabling intercommunication.

Here, various things (hereinafter, referred to as 'IoT devices') are connected to a server for providing an Internet of Things service, and may thereby form an Internet of Things network. Also, a user inputs a control command for controlling an IoT device to an electronic device such as a smartphone connected to a server, and may thereby control the IoT device easily without limitation on time and place.

Meanwhile, recently, a movement for standardizing communication protocols of the Internet of Things under a purpose of connecting all things that exist in the world to a network is being made actively. However, as the conventional standard for Internet of Things communication has been changed, there may be a plurality of IoT devices that operate according to different communication standards in a home.

In this case, there is inconvenience that a user has to install each application that can transmit control commands according to each communication standard in a smartphone, for controlling respective IoT devices that operate according to different communication standards.
KR 2017 0060 598 A discloses a smart home service which is capable of providing an environment in which calling a control command for a device is available via a user terminal protocol to control between the device and a user terminal based on different type of protocol and a control method for the same. The smart home service server connecting at least one device operated based on a first protocol to at least one user terminal operated based on a second protocol, includes an application programming interface controller configured to allow a control command for the at least one device to be called via the second protocol of the at least one user terminal, a filter configured to convert the called control command according to the first protocol, and a control command transmitter configured to transmit the control command converted according to the first protocol, to the at least one device.
US 2004 139 210 A1 discloses a home network system which comprises a home server for outputting a control signal based on a home server protocol to control an operation of a home appliance connected to a network constructed for home networking, a passive home appliance for performing a control operation in response to a control signal based on a home appliance protocol and outputting a status information signal to the home server, and a protocol converter for converting different protocols of signals transmitted and received between the home server and the passive home appliance.

### [Detailed Description of the Invention]

### [Technical Problem]

The disclosure was devised for resolving the aforementioned problem, and the purpose of the disclosure is in providing an electronic device control system that is capable of controlling a plurality of IoT devices that operate based on different communication standards and a method for controlling the electronic device.

### [Technical Solution]

An electronic device control system according to the invention is disclosed in claim 1.

Here, one of the first and second formats may be a format according to an open connectivity foundation (OCF) standard.

Also, the electronic device transmits a response signal for the control signal to the server, and the server, based on the format of status data included in the response signal being a first format, transmits the response signal to the external server, and based on the format of status data included in the response signal being a second format, converts the format of the status data into the first format, and transmits the response signal including the converted status data to the external server.

In addition, the electronic device may, based on status information of the electronic device being changed, transmit the changed status information to the server. Also, the server may determine the format of status data included in the status information, and based on the status data being the first format, transmit the status information to the external server, and based on the status data being the second format, convert the status data in the second format included in the status information into the first format, and transmit the status information including the converted status data to the external server.

Meanwhile, a server controlling an electronic device according to the invention is disclosed in claim 4.

Here, one of the first and second formats may be a format according to an open connectivity foundation (OCF) standard.

Also, the disclosure includes a storage part storing device information for at least one electronic device in a type operating by a command in the first format and at least one electronic device in a type operating by a command in the second format. In addition, the processor, based on receiving the control signal, identifies whether the electronic device is an electronic device in a type operating by a command in the first format or an electronic device in a type operating by a command in the second format based on device information of the electronic device included in the control signal and the stored device information.

Further, the disclosure may further include a storage part storing a command in the second format matched with a command in the first format. Also, the processor may, based on the stored command, determine a command in the second format matched with a command in the first format included in the control signal, convert the command in the first format included in the control signal into the command in the second format, and transmit the control signal including the converted command to the electronic device.

In addition, the processor, based on receiving a response signal for the control signal from the electronic device, determines the format of status data included in the response signal, and based on the status data being the first format, control the communicator to transmit the response signal to the external server, and based on the status data being the second format, convert the format of the status data into the first format, and control the communicator to transmit the response signal including the converted status data to the external server.

Further, the processor may, based on status information of the electronic device being changed, receive the status information from the electronic device.

Also, the processor may, based on receiving status information of the electronic device from the electronic device, determine the format of status data included in the status information, and based on the status data being the first format, control the communicator to transmit the status information to the external server, and based on the status data being the second format, convert the status data in the second format included in the status information into the first format, and control the communicator to transmit the status information including the converted status data to the external server.

In addition, the disclosure may further include a storage part storing status data in the second format matched with status data in the first format. Also, the processor may, based on the stored status data, determine a command in the first format matched with a command in the second format included in the status information, convert the status data in the second format included in the status information into the status data in the first format, and transmit the control signal including the converted status data to the electronic device.

Meanwhile, an electronic device according to an embodiment of the disclosure may include a communicator performing communication with a server, and a processor controlling the communicator to receive a control signal for controlling the electronic device from the server. Also, the control signal may include, based on the electronic device being a device operating based on a command in a first format, a command in the first format, and include, based on the electronic device being a device operating based on a command in a second format, a command in the second format. In addition, the processor may control the electronic device to perform an operation corresponding to the received control signal.

Also, the processor may generate a response signal for the control signal, and transmit the generated response signal to the server. In addition, the response signal may include, based on the electronic device being a device operating based on a command in the first format, status data in the first format, and include, based on the electronic device being a device operating based on a command in the second format, status data in the first format.

Further, the processor may, based on status information of the electronic device being changed, transmit the status information to the external server. Also, the status information may include, based on the electronic device being a device operating based on a command in the first format, status data in the first format, and include, based on the electronic device being a device operating based on a command in the second format, status data in the first format.

Meanwhile, a terminal device according to an embodiment of the disclosure may include a communicator performing communication with an external server and a processor controlling the communicator to transmit a control signal for controlling an electronic device to the external server, and the control signal may include a command in a first format, and the external server may transmit the control signal including the command in the first format to a server. Also, the server may, based on an electronic device being a type of electronic device operating based on a command in the first format, transmit the control signal to the electronic device, and based on the electronic device being a type of electronic device operating based on a command in a second format, convert the command in the first format included in the control signal into the second format, and transmit the control signal including the converted command to the electronic device.

Also, the processor may receive a response signal for the control signal from the external server, and the response signal may include, based on the electronic device being a device operating based on a command in the first format, status data in the first format, and include, based on the electronic device being a device operating based on a command in the second format, status data in the first format.

In addition, the processor may receive status information of the electronic device from the external server, and the status information may include, based on the electronic device being a device operating based on a command in the first format, status data in the first format, and include, based on the electronic device being a device operating based on a command in the second format, status data in the first format.

Meanwhile, a method for controlling an electronic device by an electronic device control system according to an embodiment of the disclosure may include the steps of transmitting a control signal for controlling the electronic device to an external server by a terminal device, receiving the control signal from the external server, identifying the type of the electronic device based on the control signal, and based on the electronic device being a type of electronic device operating based on a command in the first format, and the control signal including a command in the first format, transmitting the control signal to the electronic device, and based on the electronic device being a type of electronic device operating based on a command in the second format, and the control signal including a command in the first format, converting the command in the first format included in the control signal into the second format, and transmitting the control signal including the converted command to the electronic device.

Here, one of the first and second formats may be a format according to an open connectivity foundation (OCF) standard.

Meanwhile, the controlling method may further include the steps of transmitting a response signal for the control signal to the server by the electronic device, and based on the format of status data included in the response signal being the first format, transmitting the response signal to the external server, and based on the format of status data included in the response signal being the second format, converting the format of the status data into the first format, and transmitting the response signal including the converted status data to the external server.

Also, the controlling method may further include the steps of, based on status information of the electronic device being changed, transmitting the changed status information to the server by the electronic device, and determining the format of status data included in the status information, and based on the status data being the first format, transmitting the status information to the external server, and based on the status data being the second format, converting the status data in the second format included in the status information into the first format, and transmitting the status information including the converted status data to the external server.

Meanwhile, a method for controlling an electronic device by a server according to an embodiment of the disclosure may include the steps of receiving a control signal for controlling the electronic device from an external server, identifying the type of the electronic device based on the control signal, and based on the electronic device being a type of device operating by a command in a first format, and the control signal including a command in the first format, transmitting the control signal to the electronic device, and based on the electronic device being a type of device operating by a command in a second format, and the control signal including a command in the first format, converting the command in the first formant included in the control signal into the second format, and transmitting the control signal including the converted command to the electronic device.

Here, one of the first and second formats may be a format according to an open connectivity foundation (OCF) standard.

Meanwhile, the controlling method may further include the step of storing device information for at least one electronic device in a type operating by a command in the first format and at least one electronic device in a type operating by a command in the second format. Also, in the identifying step, it may be identified whether the electronic device is a device in a type operating by a command in the first format or a device in a type operating by a command in the second format based on device information of the electronic device included in the control signal and the stored device information.

Also, the controlling method may further include the step of storing a command in the second format matched with a command in the first format. In addition, in the transmitting step, a command in the second format matched with a command in the first format included in the control signal may be determined, the command in the first format included in the control signal may be converted into the command in the second format, and the control signal including the converted command may be transmitted to the electronic device.

Further, the controlling method may further include the steps of, based on receiving a response signal for the control signal from the electronic device, determining the format of status data included in the response signal, and based on the status data being the first format, transmitting the response signal to the external server, and based on the status data being the second format, converting the format of the status data into the first format, and transmitting the response signal including the converted status data to the external server.

Also, the controlling method may further include the step of, based on status information of the electronic device being changed, receiving the status information from the electronic device.

In addition, the controlling method may further include the steps of, based on receiving status information of the electronic device from the electronic device, determining the format of status data included in the status information, and based on the status data being the first format, transmitting the status information to the external server, and based on the status data being the second format, converting the status data in the second format included in the status information into the first format, and transmitting the status information including the converted status data to the external server.

Further, the controlling method may further include the step of storing status data in the second format matched with status data in the first format. Also, in the transmitting step, based on the stored status data, a command in the first format matched with a command in the second format included in the status information may be determined, the status data in the second format included in the status information may be converted into the status data in the first format, and the control signal including the converted status data may be transmitted to the electronic device.

### [Effect of the Invention]

According to the various embodiments of the disclosure as described above, a user can control not only an IoT device that operates according to the conventional Internet of Things communication standard, but also an IoT device that operates according to the changed Internet of Things communication standard by using one application.

Also, an IoT service provider can provide not only a service for an IoT device that operates according to the conventional Internet of Things communication standard, but also a service for an IoT device that operates according to the changed Internet of Things communication standard by keeping using a conventional IoT server, without having to construct a new server that operates according to the changed Internet of Things communication standard.

In addition, versatility and expandability of an Internet of Things network can be increased.

### [Brief Description of Drawings]

FIG. 1 is a diagram for illustrating an Internet of Things system 1000 according to an embodiment of the disclosure;
FIG. 2 is a block diagram for illustrating a server according to an embodiment of the disclosure;
FIG. 3 is a diagram for illustrating a server that converts a command included in a control signal according to the type of an electronic device according to an embodiment of the disclosure;
FIG. 4 is a diagram for illustrating commands in different formats according to an embodiment of the disclosure;
FIG. 5 is a diagram for illustrating a server that converts status words included in a response signal and status information according to the type of an electronic device according to an embodiment of the disclosure;
FIG. 6 is a diagram for illustrating status words in different formats according to an embodiment of the disclosure;
FIG. 7 is a detailed block diagram for illustrating a server according to an embodiment of the disclosure;
FIG. 8 is a flow chart for illustrating the operation of an electronic device control system according to an embodiment of the disclosure; and
FIG. 9 is a flow chart for illustrating a method for a server to control an electronic device according to an embodiment of the disclosure.

### [Best Mode for Implementing the Invention]

-

### [Mode for Implementing the Invention]

Various modifications may be made to the embodiments of the disclosure, and there may be various types of embodiments. Accordingly, specific embodiments among the embodiments will be illustrated in drawings, and the embodiments will be described in detail in the detailed description. However, it should be noted that the various embodiments are not for limiting the scope of the disclosure to a specific embodiment, but they should be interpreted to include all modifications, alternatives of the embodiments and the technical scopes disclosed herein. Meanwhile, in case it is determined that in describing embodiments, detailed explanation of related known technologies may unnecessarily confuse the gist of the disclosure, the detailed explanation will be omitted.

In addition, terms such as "first," "second" and the like may be used to describe various elements, but the terms are not intended to limit the elements. Such terms are used only to distinguish one element from another element.

The terms used in the disclosure are used only to explain specific embodiments, and are not intended to limit the scope of the disclosure. Also, singular expressions include plural expressions, unless defined obviously differently in the context. Further, in the disclosure, terms such as "include" and "consist of" should be construed as designating that there are such characteristics, numbers, steps, operations, elements, components or a combination thereof described in the specification, but not as excluding in advance the existence or possibility of adding one or more of other characteristics, numbers, steps, operations, elements, components or a combination thereof.

Meanwhile, in the embodiments of the disclosure, `a module' or `a part' may perform at least one function or operation, and may be implemented as hardware or software, or as a combination of hardware and software. Further, a plurality of 'modules' or a plurality of 'parts' may be integrated into at least one module and implemented as at least one processor (not shown), excluding `a module' or `a part' that needs to be implemented as specific hardware.

Hereinafter, the disclosure will be described in detail with reference to the accompanying drawings.

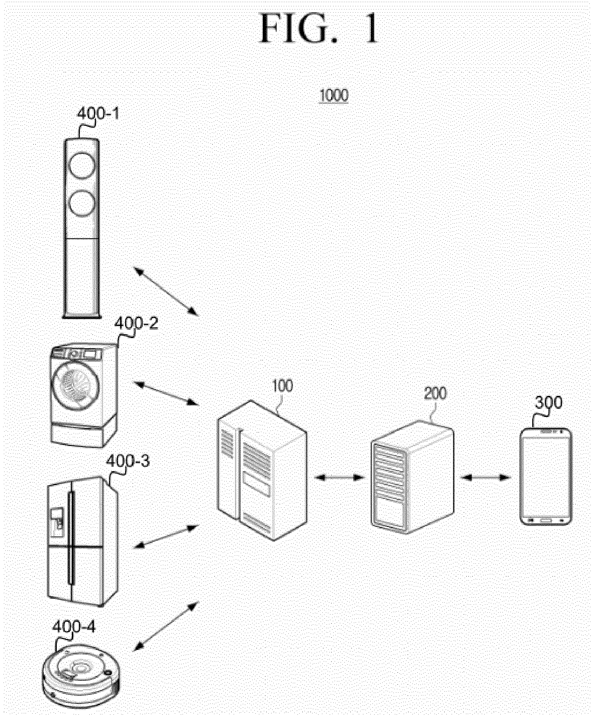

FIG. 1 is a diagram for illustrating an Internet of Things system 1000 according to an embodiment of the disclosure.

Referring to FIG. 1, an electronic device control system 1000 according to an embodiment of the disclosure may include a server 100, an external server 200, a terminal device 300, and at least one electronic device 400. Here, the electronic device control system 1000 may be an Internet of Things system, and in this case, the electronic device 400 may be an IoT device. Hereinafter, explanation will be made focused on a case wherein the disclosure is implemented as the Internet of Things, but the technical idea of the disclosure may be applied to various electronic devices using different communication protocols other than the Internet of Things.

The Internet of Things (IoT) means a technology of connecting an IoT device with a communication function installed thereon to a network and transmitting and receiving information between a person and an object or between an object and an object.

As illustrated in FIG. 1, an IoT device that may be connected to a network based on the Internet of Things may be various home appliances such as an air conditioner 400-1, a washing machine 400-2, a refrigerator 400-3, a robot cleaner 400-4, and the like. However, these are merely examples, and the types of an IoT device are obviously not limited thereto. As an example, an IoT device may include all things in the surroundings such as a computer, a laptop computer, a sensor, an automobile, a door lock device, a game machine, a security device, and the like.

An IoT device as above may be connected to the server 100 and constitute an Internet of Things network. In this case, the server 100 may receive status information of the IoT device, etc. from the connected IoT device, and transmit the received information to another IoT device, and may thereby provide an Internet of Things service. For example, in case the server 100 received status information that the current humidity in the surroundings is greater than or equal to a predetermined value from the air conditioner 400-1, the server 100 may transmit the received status information to an IoT device such as the smartphone of a user, and may thereby provide an Internet of Things service to the user.

Also, an Internet of Things network may be constituted as the terminal device 300 is connected to the server 100. In this case, if a control signal for controlling an IoT device is received from the terminal device 300, the server 100 may transmit the received control signal to the IoT device which is the subject of control, and may thereby provide an Internet of Things service. For example, in case the server 100 received a control signal including a command for turning on the power of the air conditioner 400-1 from the terminal device 300, the server 100 may transmit the received control signal to the air conditioner 400-1, and the air conditioner 400-1 may turn on the power in a turned-off state when the control signal is received, and may thereby provide an Internet of Things service to the user.

Here, the terminal device 300 may be implemented as a smartphone, as illustrated in FIG. 1. However, this is merely an example, and the terminal device 300 may be implemented as various electronic devices such as a cellular phone, a tablet PC, a smart TV, a digital camera, a personal digital assistant (PDA), a remote controller, a portable multimedia player (PMP), a laptop computer, a desktop computer, and the like.

Meanwhile, an IoT device and the terminal device 300 may be connected to the server 100 through various communication links such as Zigbee, WiFi, Bluetooth, mobile communication, near field communication (LAN), wide area communication (WAN), and the like.

Meanwhile, the Internet of Things can be implemented when an IoT device, a server, and a terminal device constitute one network.

Accordingly, various organizations for standardization related to the Internet of Things are in activity these days. Each organization for standardization is engaged in active movements for standardizing communication protocols of the Internet of Things under a purpose of connecting all things that exist in the world to one network.

In particular, recently, the Open Connectivity Foundation (OCF) which is a global organization developed an open-type Internet of Things platform. Here, an open-type Internet of Things platform means a communication standard of which source is open, and by virtue of this, each service provider became to be able to provide IoT services by using the communication protocol developed by the OCF, without having to develop a communication protocol by themselves.

Meanwhile, with the appearance of IoT devices using a new communication standard as above, an IoT device that operates according to the conventional communication standard (hereinafter, referred to as `a legacy IoT device') and an IoT device that operates according to a new communication standard (hereinafter, referred to as `an OCF IoT device') may exist together in a home.

In this case, in a conventional terminal device 300, each application operating according to the same communication standard as the communication standard adopted by the IoT device 400 had to be installed for controlling each IoT device 400 operating according to different communication standards. This was because, in order that a control command input through a terminal device could be applied to an IoT device, a control command in a command structure that the IoT device could recognize had to be transmitted to the IoT device.

Due to this, there was inconvenience that a user had to install each application in the terminal device 300, and then input a control command by executing a different application according to the IoT device to be controlled.

Referring to FIG. 1 again, among the plurality of IoT devices 400, some may be legacy IoT devices operating according to the conventional communication standard, and the others may be OCF IoT devices operating according to a new communication standard. Also, the external server 200 is a server 200 for controlling legacy IoT devices, and may be a server operating according to the conventional communication standard.

In this case, in a conventional terminal device, there were problems that an application for controlling legacy IoT devices and an application for controlling OCF IoT devices had to be installed respectively, and communication had to be performed with the server 200 for controlling legacy IoT devices and a server (not shown) for controlling OCF IoT devices respectively.

Also, there was a problem that a service provider that was operating the external server 200 for controlling legacy IoT devices had to additionally construct a separate server (not shown) for controlling OCF IoT devices as IoT devices following the communication standard of the OCF appeared.

Accordingly, there was an increasing need for the server 100 that enables control of all of legacy IoT devices and OCF IoT devices by using one of an application for controlling legacy IoT devices or an application for controlling OCF IoT devices, without having to install a plurality of applications for controlling each of legacy IoT devices and OCF IoT devices in a terminal device.

Also, for resolving the problem in terms of cost according to construction of a separate server (not shown) for controlling OCF IoT devices, there was an increasing need for the server 100 that enables control of OCF IoT devices that newly appeared by using the conventional server 200.

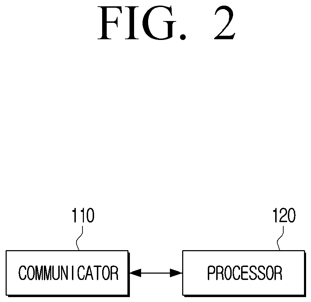

Hereinafter, the server 100 according to an embodiment of the disclosure that appeared according to the aforementioned need will be described in detail with reference to FIGS. 2 to 6.

FIG. 2 is a block diagram for illustrating a server according to an embodiment of the disclosure.

Referring to FIG. 2, the server 100 according to an embodiment of the disclosure includes a communicator 110 and a processor 120.

The communicator 110 may perform communication with the external server 200 and the IoT device 400, and transmit and receive various kinds of data. For example, the communicator 110 may receive a control signal for controlling an IoT device input through the terminal device 300 from the external server 200, and transmit the received control signal to the IoT device. Also, the communicator 110 may receive status information of the IoT device from the IoT device, and transmit the received status information to the external server 200. Meanwhile, this is merely an example, and the communicator 110 may transmit and receive various kinds of data related to Internet of Things services with the external server 200 and the IoT device 400.

For this, the communicator 110 may be connected with the external server 200 and the IoT device 400 through wireless communication. Here, wireless communication may use at least one communication method among long-term evolution (LTE), LTE Advance (LTE-A), code division multiple access (CDMA), wideband CDMA (WCDMA), a universal mobile telecommunications system (UMTS), a wireless broadband (WiBro), or a global system for mobile communications (GSM). Also, wireless communication may include near field communication. For example, near field communication may be at least one of wireless fidelity direct (WiFi direct), Bluetooth, near field communication (NFC), or Zigbee.

For this, the communicator 110 may include a WiFi module, a Bluetooth module, a wireless communication chip, etc.

Meanwhile, the communicator 110 may also be connected with the IoT device 400 through wired communication. Here, wired communication may include at least one of a universal serial bus (USB), a high definition multimedia interface (HDMI), a recommended standard 232 (RS-232), or a plain old telephone service (POTS).

The processor 120 controls the overall operations of the server 100.

First, the processor 120 may receive a control signal from the external server 200 through the communicator 110. Here, a control signal is a signal that the external server 200 received from the terminal device 300, and means a signal for controlling an IoT device. Also, in a control signal, ID information for a device that is the subject of control and a command in a specific format may be included. For example, in the case of a control signal for turning on the power of an air conditioner, the control signal may include ID information for the air conditioner (e.g., "Device ID _ Air Conditional") and a command for turning on the power (e.g., "{"x.com.samsung.da.power": "On"}).

Also, when a control signal is received from the external server 200, the processor 120 may identify the type of the IoT device based on the control signal.

Specifically, the processor 120 may identify whether the IoT device which is the subject of control is an IoT device in a legacy type or an IoT device in an OCF type based on device information of the device included in the control signal. As described above, here, an IoT device in a legacy type may be an IoT device operating according to the conventional communication standard, and an IoT device in an OCF type may be an IoT device operating according to the OCF communication standard which is a changed communication standard.

For this, the processor 120 may use device information for a plurality of IoT devices stored in a storage part (not shown).

Specifically, the storage part (not shown) may store device information for a plurality of IoT devices classified according to a model classification system. That is, in the storage part (not shown), device information classified into at least one IoT device in a type operating by a command in the first format and at least one IoT device in a type operating by a command in the second format that will be described below may be stored.

For example, the storage part (not shown) may store device information classified into each of a legacy IoT device model and an OCF IoT device model. That is, the storage part (not shown) may match ID information of a device operating according to the conventional communication standard with a legacy IoT device model, and store the information, and may match ID information of a device operating according to the OCF communication standard with an OCF IoT device model, and store the information. Here, ID information of devices matched with each model may be a universally unique identifier (UUID) indicating unique ID information of devices.

Accordingly, the processor 120 may compare ID information of a device which is the subject of a control command included in a control signal and ID information of devices stored in the storage part (not shown), and identify whether the IoT device is a legacy IoT device model or an OCF IoT device model. That is, the processor 120 may identify whether an IoT device is a device in a type operating by a command in the first format or an IoT device in a type operating by a command in the second format that will be described below.

Then, the processor 120 may determine whether to convert the format of the command included in the control signal based on the identified type of the IoT device and the format of the command included in the control signal.

Specifically, in case an IoT device which is the subject of control is a type of device operating by a command in the first format and the control signal includes a command in the first format, the processor 120 may transmit the control signal to the IoT device without converting the format of the command included in the control signal.

In contrast, in case an IoT device is a type of device operating by a command in the second format and the control signal includes a command in the first format, the processor 120 may convert the command included in the control signal into the second format, and transmit the control signal including the converted command to the IoT device.

Here, a command in the first format may be a command in a format applied to a legacy IoT device, and a command in the second format may be a command in a format applied to an OCF IoT device.

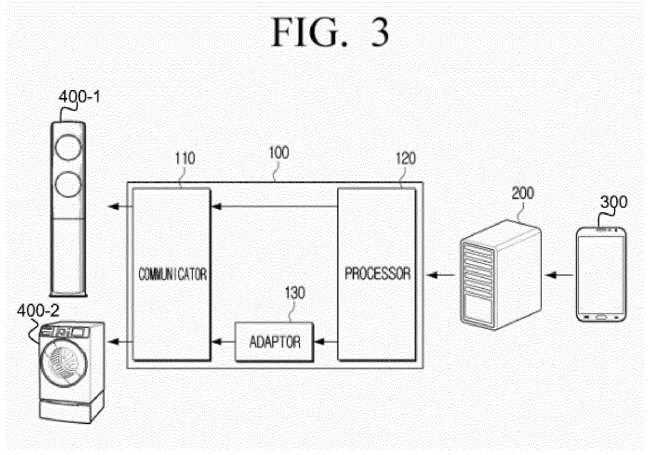

Hereinafter, explanation will be made with reference to FIG. 3.

FIG. 3 is a diagram for illustrating a server that converts a command included in a control signal according to the type of an IoT device according to an embodiment of the disclosure.

Referring to FIG. 3, a legacy IoT device 400-1 and an OCF IoT device 400-2 may exist together in a home. Also, the server 100 may further include an adaptor 130 for converting the format of a command.

First, when a control signal for controlling an IoT device is received from the external server 200, the processor 120 identifies the type of the IoT device which is the subject of control, as described above.

Also, in case the type of the IoT device which is the subject of control is the legacy IoT device 400-1 type, and the command included in the control signal is a command in a format applied to a legacy IoT device, the processor 120 may transmit the received control signal to the legacy IoT device 400-1 without converting the format of the command. This is because the control signal was transmitted as a command in a format that the IoT device 400-1 can recognize.

In contrast, in case the type of the IoT device which is the subject of control is the OCF IoT device 400-2 type, and the command included in the control signal is a command in a format applied to a legacy IoT device, the processor 120 may convert the format of the command into a format applied to an OCF IoT device, and transmit the control signal including the converted command to the OCF IoT device 400-2. This is because a command in a format that the OCF IoT device 400-2 cannot recognize was received from the external server 200.

By converting the format of a command as above, the OCF IoT device 400-2 may receive a control signal including a command in a recognizable format, and perform an operation corresponding to the received control signal.

Meanwhile, in FIG. 3, it was illustrated that the adaptor 130 for converting the format of a command is a separate device from the processor 120, but this is just for the convenience of explanation, and the adaptor 130 may be implemented as a form of being included in the processor 120.

Meanwhile, in converting the format of a command, the processor 120 may use information on commands in the first and second formats stored in the storage part (not shown).

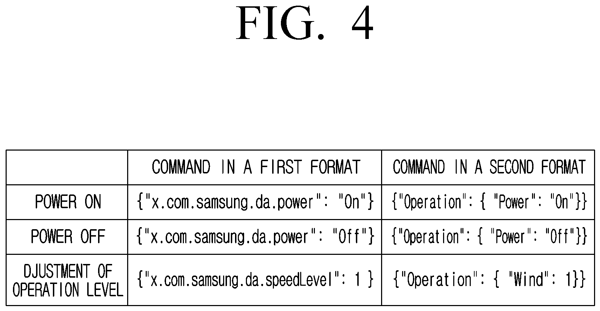

Specifically, the processor 120 may convert a command in the first format into a command in the second format by using a command in the second format matched with a command in the first format. Hereinafter, explanation will be made with reference to FIG. 4.

FIG. 4 is a diagram for illustrating commands in different formats according to an embodiment of the disclosure.

Referring to FIG. 4, the storage part (not shown) may store a command in the second format matched with a command in the first format. Here, a command in the first format may be a command in a format that a legacy IoT device can recognize, and a command in the second format may be a command in a format that an OCF IoT device can recognize.

Also, in case the type of the IoT device which is the subject of control is the OCF IoT device 400-2 type, and the command included in the control signal is a command in a format applied to a legacy IoT device, the processor 120 may convert the format of the command included in the control signal into a format that the OCF IoT device 400-2 can recognize by using information on commands in the first and second formats stored in the storage part (not shown).

For example, in case the command included in the control signal is a command for turning on the power of the OCF IoT device 400-2 (e.g., property: {"rt": [ "set.operation" ], "if": [ "set.baseline", "oic.if.a" ], "x.com.samsung.da.power": "On" }), the processor 120 may determine {"Operation": { "power": "On" }} which is a command in the second format matched with x. com. sam sung. da. power": "On" } which is the command in the first format based on information on commands stored in the storage part (not shown), and convert the format of the control signal into {"Operation": { "power": "On" }} which is the second format.

Accordingly, the OCF IoT device 400-2 may receive the control signal including the converted command, and recognize the converted command, and perform an operation of turning on the power.

Meanwhile, the commands in the first and second formats illustrated in FIG. 4 are merely examples, and the format of each command is obviously not limited thereto. That is, the format of each command may vary according to the system that an organization for standardization selected.

Meanwhile, the control commands for adjusting turning-on and turning-off of the power and the operation level illustrated in FIG. 4 are merely examples, too, and the types of control commands for controlling an IoT device are not limited thereto.

Meanwhile, as described above, as the server 100 according to an embodiment of the disclosure converts the format of a command according to the type of the IoT device which is the subject of control, there is an effect that a user can control each IoT device operating according to different communication standards while installing only one application in a terminal device.

Also, an IoT service provider can provide not only a service for an IoT device that operates according to the conventional Internet of Things communication standard, but also a service for an IoT device that operates according to the changed Internet of Things communication standard by keeping using a conventional IoT server, without having to construct a new server that operates according to the changed Internet of Things communication standard.

Meanwhile, in the above, it was illustrated that a command in the first format is a command that a legacy IoT device can recognize, and a command in the second format is a command that an OCF IoT device can recognize, but the technical idea of the disclosure can be applied in an opposite case.

Specifically, in the case of receiving a command in a format that an OCF IoT device can recognize from the external server 200, the processor 120 may first identify the type of the IoT device which is the subject of the control command. Also, in case the IoT device which is the subject of the control is a legacy IoT device, the processor 120 may convert the format of the received command into a format that a legacy IoT device can recognize based on information on commands in the first and second formats stored in the storage part (not shown), and then transmit the control signal including the converted command to the IoT device. Meanwhile, in case the IoT device which is the subject of control is an OCF IoT device, the processor 120 may transmit the received command without converting the format.

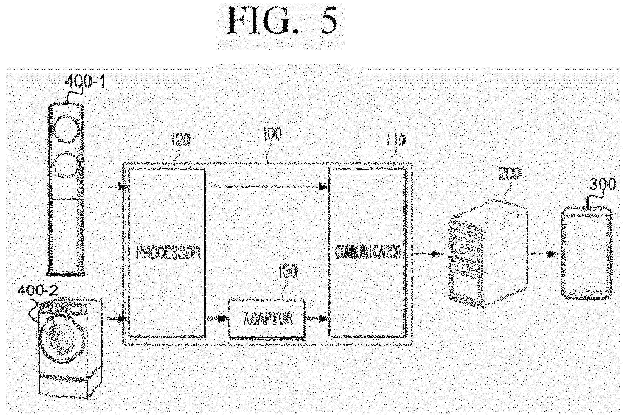

Meanwhile, the processor 120 may receive a response signal for a control signal or status information of an IoT device from an IoT device. Hereinafter, explanation will be made with reference to FIG. 5.

FIG. 5 is a diagram for illustrating a server that converts status words included in a response signal and status information according to the type of an IoT device according to an embodiment of the disclosure.

Referring to FIG. 5, a legacy IoT device 400-1 and an OCF IoT device 400-2 may exist together in a home. Also, the server 100 may further include an adaptor 130 for converting the format of a command.

First, the processor 120 may receive a response signal for a control signal from an IoT device. Also, in case status information of the IoT device was changed, the processor 120 may receive the status information from the IoT device.

Here, in the response signal and the status information, status words may be included. A status word includes information on the status of an IoT device. For example, in case a status word is {property: {"rt": [ "set.operation" ], "if": [ "set.baseline", "oic.if.a" ], "x.com.samsung.da.power": "On"}}, the status word may include information that the power of an air conditioner has been turned on.

Also, when the response signal or the status information is received, the processor 120 may determine the format of the status word included in the response signal or the status information, and determine whether to convert the format.

Specifically, if the status word is the first format and the external server 200 is a server operating based on a communication standard corresponding to the first format, the processor 120 may control the communicator 110 to transmit the response signal to the external server 200. That is, the processor 120 may transmit the response signal to the external server 200 without converting the format of the status word. This is because the IoT device 400-1 and the external server 200 use the same communication standard, and the terminal device 300 connected with the external server 200 can recognize status words.

In contrast, if the status word is the second format and the external server 200 is a server operating based on a communication standard corresponding to the first format, the processor 120 may convert the format of the status word into the first format, and control the communicator 110 to transmit the response signal including the converted status word to the external server 200.

This is because the server 100 received a command in a format that the terminal device 300 connected with the external server 200 cannot recognize from the IoT device 400-2. As a status word is transmitted while being converted as above, the external server 200 can receive a status word in a format that can be recognized by the terminal device 300 from the server 100, and the terminal device 300 can recognize information on the current status of the IoT device 400-2.

Meanwhile, in FIG. 5, it was illustrated that the adaptor 130 for changing the format of a status word is a separate device from the processor 120, but this is just for the convenience of explanation, and the adaptor 130 may be implemented as a form of being included in the processor 120.

Meanwhile, in converting the format of a status word, the processor 120 may use information on status words in the first and second formats stored in the storage part (not shown).

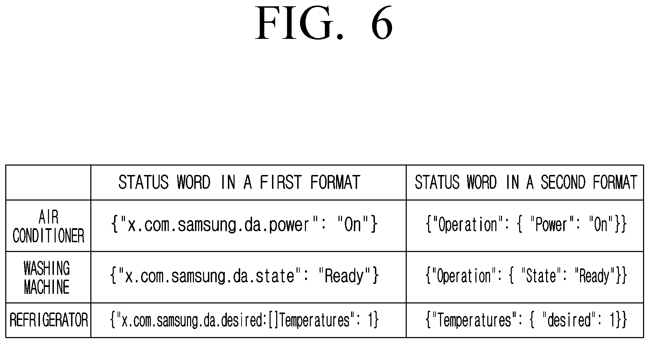

Specifically, the processor 120 may convert a status word in the first format into a status word in the second format by using a status word in the second format in the storage part (not shown) matched with the status word in the first format. Hereinafter, explanation will be made with reference to FIG. 6.

FIG. 6 is a diagram for illustrating status words in different formats according to an embodiment of the disclosure.

Referring to FIG. 6, in the storage part (not shown), a status word in the second format matched with a status word in the first format may be stored. Here, a status word in the first format may be a status word in a format that a legacy IoT device transmits, and a status word in the second format may be a status word in a format that an OCF IoT device transmits.

Also, in case the external server 200 is a server operating based on a status word in the first format, and a status word included in a response signal or status information is a command in a format applied to an OCF IoT device, the processor 120 may convert the format of the status word included in the response signal or the status information into a format that the terminal device 300 connected with the external server 200 can recognize by using information on status words in the first and second formats stored in the storage (not shown).

For example, in case a status word included in a response signal or status information is a status word indicating that the OCF IoT device 400-2 is performing a drying operation (e.g., {"rt": [ "set.operation" ], "if": [ "set.baseline", "oic.if.a" ], " "Operation": { "power": "On" }}), the processor 120 may determine {"x.com.samsung.da.power": "On"} which is a status word in the first format matched with "Operation": { "power": "On" } which is the status word in the second format based on information on status words stored in the storage part (not shown), and convert the format of the status word included in the response signal or the status information into {"x.com.samsung.da.power": "On"}. Accordingly, the external server 200 may receive the response signal or the status information including the converted status word from the server 100, and the terminal device 300 may recognize the converted status word, and provide the user with information on the current status of the IoT device.

Meanwhile, the status words in the first and second formats illustrated in FIG. 6 are merely examples, and the format of each status word is obviously not limited thereto. That is, the format of each status word may vary according to the system that an organization for standardization selected.

Meanwhile, the status words such as the turned-on state of the power, the state of a drying operation, etc. illustrated in FIG. 6 are merely examples, too, and the types of status words indicating the states of an IoT device are not limited thereto.

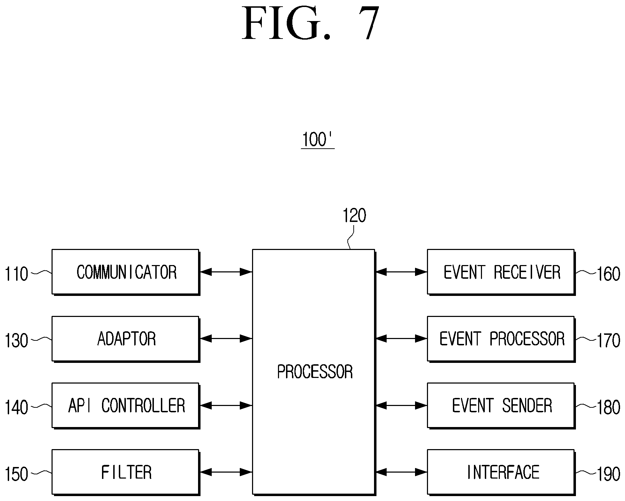

FIG. 7 is a detailed block diagram for illustrating a server according to an embodiment of the disclosure.

Referring to FIG. 7, the server 100' according to an embodiment of the disclosure includes a communicator 110, a processor 120, an adaptor 130, an API controller 140, a filter 150, an event receiver 160, an event processor 170, an event sender 180, and an interface 190. Hereinafter, parts overlapping with the aforementioned descriptions will be omitted or explained in an abridged form.

Also, hereinafter, for the convenience of explanation, explanation will be made based on the assumption of a case wherein an IoT device and an external server and a terminal device operate based on different communication protocols. That is, explanation will be made based on a case wherein an IoT device operates according to a format according to the OCF communication standard, and an external server and a terminal device operate according to a format according to the legacy communication standard.

The API controller 140 may control connection between devices operating based on different communication protocols. For example, the API controller 140 may perform connection between an IoT device and a terminal device operating based on different communication protocols. That is, the API controller 140 may be defined as a gathering of sub routines or functions that may provide an environment wherein an operation based on another communication protocol can be performed under a communication protocol.

When a control signal is received from the external server 200 through the API controller 140, the filter 150 may convert the control signal to correspond to the communication protocol of an OCF IoT device. Specifically, as an OCF IoT device and a terminal device have different communication protocols, the forms of the transmitted information and the methods of transmission may be different. Accordingly, in order that the OCF IoT device can operate according to the control signal, the filter 150 may convert the control signal received from the external server 200 to correspond to the communication protocol of the OCF IoT device.

Meanwhile, here, information converted is the format of a control signal or a method of transmission, and is a concept distinguished from the aforementioned format of a command or a status word.

The communicator 110 may transmit a control signal converted by the filter 150 to an IoT device. Here, the control signal transmitted may not only be a signal of which form or method of transmission has been converted by the filter 150, but may also include a command in a format converted by the processor 120.

Accordingly, even in a case wherein a control signal according to the legacy communication standard is received from the external server 200, the server 100' may transmit the converted control signal to an OCF IoT device, and in accordance thereto, the OCF IoT device may perform an operation corresponding to the control signal.

When an event occurs in an IoT device, the event receiver 160 may receive information related to the event. For example, when status information of an IoT device is changed, the event receiver 160 may receive the status information from the IoT device. Then, the event receiver 160 may temporarily store the received event, and may sequentially output the event to the event processor 170.

The event processor 170 may process the status information stored in the event receiver 160 according to a flow control method, and may thereby process the stored data effectively. Here, flow control means control that makes a data receiving side transmit data frames while maintaining a predetermined transmission speed.

When the event is processed, the event processor 170 may temporarily store the processed event in the storage part (not shown). For example, the storage part (not shown) may match an event regarding change of status information with an IoT device and store the event in the IoT device.

Then, the event processor 170 may filter the processed event through the filter 150, and may control the event sender 180 to transmit the event to the external server 200 or the terminal device 300. Here, filtering may mean converting the processed event to correspond to the communication protocol followed by the terminal device 300 so that the terminal device 300 can recognize the processed event.

Accordingly, the event sender 180 may transmit the status information of the IoT device to the external server 200 or the terminal device 300, and the user can be provided with information on the current status of the IoT device.

The interface 190 may be connected with an IoT device. Here, the interface may be implemented as a CoAP.

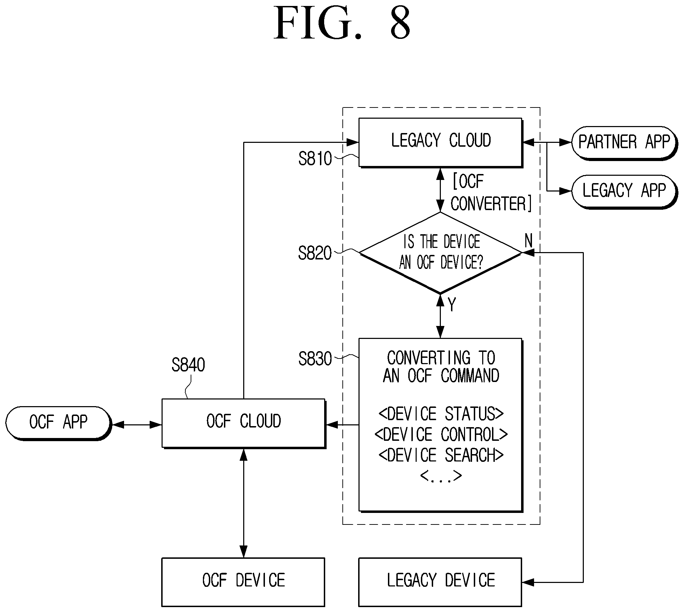

FIG. 8 is a flow chart for illustrating the operation of an electronic device control system according to an embodiment of the disclosure.

Referring to FIG. 8, in the terminal device, an application of a partner company or a legacy application may be installed. Also, the terminal device may communicate with an external server (legacy cloud) through an application of a partner company or a legacy application and transmit and receive various kinds of data. Specifically, the terminal device may transmit S810 a control signal for controlling a legacy device or an OCF device to the external server (legacy cloud).

Here, the control signal may include a command in the first format corresponding to the conventional communication standard.

Then, when the control signal is received from the terminal device, the external server (legacy cloud) may transmit the received control signal to the server.

Also, when the control signal is received, the server may identify (S820) the type of the electronic device based on the control signal. Specifically, the server may compare the ID information of the electronic device included in the control signal with a device model classification table, and identify the type of the electronic device.

Then, if it is determined that the electronic device is a legacy device operating by a command in the first format, the server may transmit the control signal received from the external server to the legacy device. Accordingly, the legacy device may perform an operation corresponding to the control signal.

Meanwhile, if it is determined that the electronic device is an OCF device operating by a command in the second format, the server may convert the command in the first format into a command in the second format corresponding to the OCF standard, and transmit the control signal including the converted command to the OCF device. Accordingly, the OCF device may perform an operation corresponding to the control signal.

That is, in case a control signal including a command in a format according to the conventional communication standard is received through an application of a partner company or a legacy application, the server according to an embodiment of the disclosure may convert the control signal into a command in a format according to the OCF communication standard, and transmit the control signal including the command in the converted format to an OCF device.

Accordingly, the user can control an OCF device by using an application of a partner company or a legacy application previously installed as they are without having to install a separate OCF application for communicating with an OCF cloud, and thus user convenience can be increased.

Meanwhile, in the terminal device, an OCF application may be installed. Also, the terminal device may communicate with an external server (OCF cloud) through the OCF application and transmit and receive various kinds of data. Specifically, the terminal device may transmit S840 a control signal for controlling a legacy device or an OCF device to the external server (OCF cloud).

Here, the control signal may include a command in the second format corresponding to the OCF communication standard.

Also, the external server (OCF cloud) may transmit a control signal received from the terminal device to an external server (OCF cloud) operating according to the conventional communication standard, and the server may receive the control signal from the external server (legacy cloud). However, the disclosure is not necessarily limited thereto, and the server may directly receive the control signal from the OCF cloud.

Then, when the control signal is received, the server may identify S820 the type of the electronic device based on the control signal. Specifically, the server may compare the ID information of the electronic device included in the control signal with a device model classification table, and identify the type of the electronic device.

Then, if it is determined that the electronic device is a legacy device operating by a command in the first format, the server may convert the control signal received from the external server into a command in the first format corresponding to the conventional communication standard, and transmit the control signal including the converted command to the legacy device. Accordingly, the legacy device may perform an operation corresponding to the control signal.

Meanwhile, if it is determined that the electronic device is an OCF device operating by a command in the second format, the server may transmit the control signal received from the external server to the OCF device. Accordingly, the OCF device may perform an operation corresponding to the control signal.

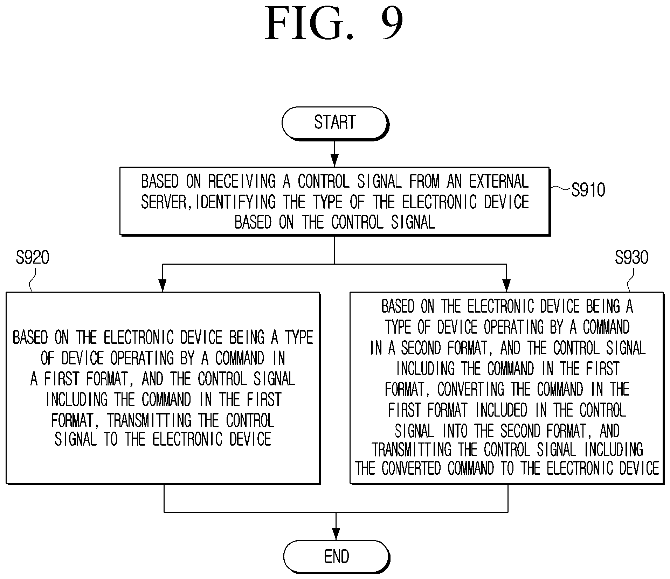

FIG. 9 is a flow chart for illustrating a method of controlling a server according to an embodiment of the disclosure.

When a control signal is received from an external server, the server may identify the type of the electronic device based on the control signal at operation S910. Here, the electronic device may be an IoT device under the Internet of Things.

Specifically, the server may identify whether an electronic device which is the subject of control is an electronic device in a legacy type or an electronic device in an OCF type based on device information of the device included in the control signal. As described above, the server may identify the type of an electronic device by using device information for a plurality of electronic devices stored in the storage part (not shown).

Also, in case an electronic device is a type of device operating by a command in the first format, and a control signal includes a command in the first format, the server may transmit the control signal to the electronic device at operation S920. This is because the electronic device and the external server use the same communication standard, and the electronic device can recognize the command included in the control signal.

Meanwhile, in case an electronic device is a type of device operating by a command in the second format, and a control signal includes a command in the first format, the server may convert the command in the first format included in the control signal into the second format, and transmit the control signal including the converted command to the electronic device.

This is because the electronic device received a command in a format that cannot be recognized from the external server. By converting the format of a command as above, the electronic device can receive a control signal including a command in a format that can be recognized, and perform an operation corresponding to the received control signal.

Meanwhile, methods according to the aforementioned various embodiments of the disclosure may be implemented in the form of software or an application that can be installed on conventional display devices.

Also, methods according to the aforementioned various embodiments of the disclosure may be implemented only by software upgrade, or hardware upgrade of conventional display devices.

In addition, the aforementioned various embodiments of the disclosure may be performed through an embedded server provided on a display device, or an external server of a display device.

Meanwhile, a non-transitory computer readable medium storing a program sequentially performing the controlling method of a display device according to the disclosure may be provided.

Specifically, a computer readable medium may include the steps of receiving a control signal for controlling an electronic device from an external server, identifying the type of the electronic device on the basis of the control signal, and based on the electronic device being a type of device operating by a command in a first format and the control signal including a command in the first format, transmitting the control signal to an IoT device, and based on the IoT device being a type of device operating by a command in a second format and the control signal including a command in the first format, converting the command in the first formant included in the control signal into the second format, and transmitting the control signal including the converted command to the IoT device.

Meanwhile, a non-transitory computer readable medium refers to a medium that stores data semi-permanently, and is readable by machines, but not a medium that stores data for a short moment such as a register, a cache, and a memory. Specifically, the aforementioned various applications or programs may be provided while being stored in a non-transitory computer readable medium such as a CD, a DVD, a hard disk, a blue-ray disk, a USB, a memory card, a ROM and the like.

## Claims

1. An electronic device control system (1000) comprising:
an electronic device (400) controlled by either a command in a first format or a command in a second format;
a terminal device (300) for transmitting a control signal, including device information and a command, for controlling the electronic device (400) to an external server (200); and
**characterized in that** a server (100) is configured to:
based on receiving the control signal from the external server (200), identify whether the electronic device (400) is an electronic device (400) in a type operating by a command in a first format or an electronic device (400) in a type operating by a command in a second format based on the device information of the electronic device (400) included in the control signal and device information stored in a storage part of the server (100),based on the electronic device (400) being identified to be a type of electronic device (400) operating by a command in the first format, and the control signal including a command in the first format, transmit the control signal to the electronic device (400), and
based on the electronic device (400) being identified to be a type of electronic device (400) operating by a command in the second format, and the control signal including a command in the first format, convert the command in the first format included in the control signal into the second format, and transmit the control signal including the converted command to the electronic device (400),
wherein the electronic device (400) transmits a response signal for the control signal to the server (100), and
the server (100) is configured to:
based on the format of a status data included in the response signal being a first format, transmit the response signal to the external server (200), and based on the format of a status data included in the response signal being a second format, convert the format of the status data into the first format, and transmit the response signal including the converted status data to the external server (200).

2. The electronic device control system (1000) of claim 1,
wherein one of the first and second formats is a format according to an open connectivity foundation (OCF) standard.

3. The electronic device control system (1000) of claim 1,
wherein, based on status information of the electronic device (400) being changed, the electronic device (400) transmits the changed status information to the server (100), and
the server (100) is configured to:
determine the format of status data included in the status information,
based on the status data being the first format, transmit the status information to the external server (200), and
based on the status data being the second format, convert the status data in the second format included in the status information into the first format, and transmit the status information including the converted status data to the external server (200).

4. A server (100) for controlling an electronic device (400) comprising:
a communicator (110) for transmitting and receiving a control signal for controlling the electronic device (400); and
**characterized in that** a processor (120) is configured to:
based on receiving the control signal, including device information and a command, from an external server (200) through the communicator, identify whether the electronic device (400) is an electronic device (400) in a type operating by a command in a first format or an electronic device (400) in a type operating by a command in a second format based on the device information of the electronic device (400) included in the control signal and device information stored in a storage part of the server (100),
based on the electronic device (400) being identified to be a type of electronic device (400) operating by a command in a first format, and the control signal including a command in the first format, control the communicator to transmit the control signal to the electronic device (400),
based on the electronic device (400) being identified to be a type of electronic device (400) operating by a command in a second format, and the control signal including a command in the first format, convert the command in the first format included in the control signal into the second format, and control the communicator to transmit the control signal including the converted command to the electronic device,
based on receiving a response signal for the control signal from the electronic device (400), determine the format of a status data included in the response signal,
based on the status data being the first format, control the communicator (110) to transmit the response signal to the external server (200), and
based on the status data being the second format, convert the format of the status data into the first format, and control the communicator (110) to transmit the response signal including the converted status data to the external server (200).

5. The server (100) of claim 4,
wherein one of the first and second formats is a format according to an open connectivity foundation (OCF) standard.

6. The server (100) of claim 4, further comprising:
a storage part storing a command in the second format matched with a command in the first format,
wherein the processor (120) is configured to:
based on the stored command, determine a command in the second format matched with a command in the first format included in the control signal, convert the command in the first format included in the control signal into the command in the second format, and transmit the control signal including the converted command to the electronic device (400).

7. The server (100) of claim 4,
wherein the processor (120) is configured to:
based on status information of the electronic device (400) being changed, receive the status information from the electronic device (400).

8. The server (100) of claim 7,
wherein the processor (120) is configured to:
based on receiving status information of the electronic device (400) from the electronic device (400), determine the format of status data included in the status information,
based on the status data being the first format, control the communicator to transmit the status information to the external server (200), and
based on the status data being the second format, convert the status data in the second format included in the status information into the first format, and control the communicator to transmit the status information including the converted status data to the external server (200).

9. The server (100) of claim 7, further comprising:
a storage part storing status data in the second format matched with a status data in the first format,
wherein the processor (120) is configured to:
based on the stored status data, determine a command in the first format matched with a command in the second format included in the status information, convert the status data in the second format included in the status information into the status data in the first format, and transmit the control signal including the converted status data to the electronic device (400).

## Patentansprüche

1. Ein elektronisches Gerätesteuerungssystem (1000), das Folgendes umfasst:
eine elektronische Vorrichtung (400), die entweder durch einen Befehl in einem ersten Format oder einen Befehl in einem zweiten Format gesteuert wird;
ein Endgerät (300) zum Übertragen eines Steuersignals, das Geräteinformationen und einen Befehl enthält, zum Steuern des elektronischen Geräts (400) an einen externen Server (200); und
**dadurch gekennzeichnet, dass** ein Server (100) konfiguriert ist, um:
basierend auf dem Empfang des Steuersignals von dem externen Server (200), zu identifizieren, ob die elektronische Vorrichtung (400) eine elektronische Vorrichtung (400) eines Typs ist, der durch einen Befehl in einem ersten Format arbeitet, oder eine elektronische Vorrichtung (400) eines Typs, der durch einen Befehl in einem zweiten Format arbeitet, basierend auf den Vorrichtungsinformationen der elektronischen Vorrichtung (400), die in dem Steuersignal enthalten sind, und Vorrichtungsinformationen, die in einem Speicherteil des Servers (100) gespeichert sind,
basierend darauf, dass die elektronische Vorrichtung (400) als ein Typ einer elektronischen Vorrichtung (400) identifiziert wird, die durch einen Befehl in dem ersten Format arbeitet, und das Steuersignal einen Befehl in dem ersten Format enthält, das Steuersignal an die elektronische Vorrichtung (400) übertragen wird, und
basierend darauf, dass die elektronische Vorrichtung (400) als ein Typ von elektronischer Vorrichtung (400) identifiziert wird, der durch einen Befehl im zweiten Format betrieben wird, und das Steuersignal einen Befehl im ersten Format enthält, den Befehl im ersten Format, der im Steuersignal enthalten ist, in das zweite Format umwandelt, und das Steuersignal, das den umgewandelten Befehl enthält, an die elektronische Vorrichtung (400) überträgt,
wobei die elektronische Vorrichtung (400) ein Antwortsignal für das Steuersignal an den Server (100) sendet, und
der Server (100) so konfiguriert ist, dass er:
basierend auf dem Format der Statusdaten, die in dem Antwortsignal enthalten sind, das ein erstes Format ist, das Antwortsignal an den externen Server (200) überträgt, und
basierend auf dem Format der Statusdaten, die in dem Antwortsignal enthalten sind, das ein zweites Format ist, das Format der Statusdaten in das erste Format zu konvertieren und das Antwortsignal einschließlich der konvertierten Statusdaten an den externen Server (200) überträgt.

2. Das elektronische Gerätesteuerungssystem (1000) nach Anspruch 1,
wobei eines der ersten und zweiten Formate ein Format gemäß einem OCF-Standard (Open Connectivity Foundation) ist.

3. Das elektronische Gerätesteuerungssystem (1000) nach Anspruch 1,
wobei die elektronische Vorrichtung (400), basierend auf einer Änderung der Statusinformation der elektronischen Vorrichtung (400), die geänderte Statusinformation an den Server (100) überträgt, und
der Server (100) so konfiguriert ist, dass er:
das Format der in den Statusinformationen enthaltenen Statusdaten bestimmt,
basierend auf den Statusdaten, die das erste Format sind, die Statusinformationen an den externen Server (200) überträgt, und
basierend auf den Statusdaten, die das zweite Format sind, die in den Statusinformationen enthaltenen Statusdaten im zweiten Format in das erste Format konvertiert und die Statusinformationen einschließlich der konvertierten Statusdaten an den externen Server (200) überträgt.

4. Ein Server (100) zur Steuerung eines elektronischen Geräts (400), der Folgendes umfasst:
einen Kommunikator (110) zum Senden und Empfangen eines Steuersignals zur Steuerung der elektronischen Vorrichtung (400); und
**dadurch gekennzeichnet, dass** ein Prozessor (120) konfiguriert ist, um:
auf der Grundlage des Empfangs des Steuersignals, das Vorrichtungsinformationen und einen Befehl enthält, von einem externen Server (200) über den Kommunikator zu identifizieren, ob die elektronische Vorrichtung (400) eine elektronische Vorrichtung (400) eines Typs ist, der durch einen Befehl in einem ersten Format arbeitet, oder eine elektronische Vorrichtung (400) eines Typs, der durch einen Befehl in einem zweiten Format arbeitet, auf der Grundlage der Vorrichtungsinformationen der elektronischen Vorrichtung (400), die in dem Steuersignal enthalten sind, und der Vorrichtungsinformationen, die in einem Speicherteil des Servers (100) gespeichert sind,
basierend darauf, dass die elektronische Vorrichtung (400) als ein Typ von elektronischer Vorrichtung (400) identifiziert wird, die durch einen Befehl in einem ersten Format betrieben wird, und das Steuersignal einen Befehl in dem ersten Format enthält, den Kommunikator steuert, um das Steuersignal an die elektronische Vorrichtung (400) zu übertragen,
basierend darauf, dass die elektronische Vorrichtung (400) als ein Typ von elektronischer Vorrichtung (400) identifiziert wird, der durch einen Befehl in einem zweiten Format betrieben wird, und das Steuersignal einen Befehl in dem ersten Format enthält, den in dem Steuersignal enthaltenen Befehl in dem ersten Format in das zweite Format umwandelt und den Kommunikator steuert, um das Steuersignal einschließlich des umgewandelten Befehls an die elektronische Vorrichtung zu übertragen,
auf der Grundlage des Empfangs eines Antwortsignals für das Steuersignal von der elektronischen Vorrichtung (400) das Format der im Antwortsignal enthaltenen Statusdaten bestimmt,
basierend auf den Statusdaten, die das erste Format sind, den Kommunikator (110) steuert, um das Antwortsignal an den externen Server (200) zu übertragen, und
basierend auf den Statusdaten, die das zweite Format sind, das Format der Statusdaten in das erste Format umwandeln und den Kommunikator (110) steuert, um das Antwortsignal, das die umgewandelten Statusdaten enthält, an den externen Server (200) zu übertragen.

5. Der Server (100) nach Anspruch 4,
wobei eines der ersten und zweiten Formate ein Format gemäß einem OCF-Standard (Open Connectivity Foundation) ist.

6. Der Server (100) nach Anspruch 4, der ferner Folgendes umfasst:
ein Speicherteil, der einen Befehl im zweiten Format speichert, der mit einem Befehl im ersten Format übereinstimmt,
wobei der Prozessor (120) so konfiguriert ist, dass er:
auf der Grundlage des gespeicherten Befehls einen Befehl im zweiten Format bestimmt, der mit einem im Steuersignal enthaltenen Befehl im ersten Format übereinstimmt, den im Steuersignal enthaltenen Befehl im ersten Format in den Befehl im zweiten Format umwandelt und das Steuersignal einschließlich des umgewandelten Befehls an die elektronische Vorrichtung (400) überträgt.

7. Der Server (100) nach Anspruch 4,
wobei der Prozessor (120) so konfiguriert ist, dass er:
basierend auf der Änderung von Statusinformationen der elektronischen Vorrichtung (400) die Statusinformationen von der elektronischen Vorrichtung (400) empfängt.

8. Der Server (100) nach Anspruch 7,
wobei der Prozessor (120) so konfiguriert ist, dass er:
basierend auf dem Empfang von Statusinformationen der elektronischen Vorrichtung (400) von der elektronischen Vorrichtung (400) das Format der in den Statusinformationen enthaltenen Statusdaten bestimmt,
basierend darauf, dass die Statusdaten das erste Format sind, den Kommunikator steuert, um die Statusinformationen an den externen Server (200) zu übertragen, und
basierend auf den Statusdaten, die das zweite Format sind, die Statusdaten im zweiten Format, die in den Statusinformationen enthalten sind, in das erste Format konvertiert, und den Kommunikator zu steuern, um die Statusinformationen einschließlich der konvertierten Statusdaten an den externen Server (200) zu übertragen.

9. Der Server (100) nach Anspruch 7, der ferner Folgendes umfasst:
einen Speicherteil, der Statusdaten im zweiten Format speichert, die mit den Statusdaten im ersten Format übereinstimmen,
wobei der Prozessor (120) so konfiguriert ist, dass er:
auf der Grundlage der gespeicherten Statusdaten einen Befehl im ersten Format bestimmt, der mit einem in den Statusinformationen enthaltenen Befehl im zweiten Format übereinstimmt, die in den Statusinformationen enthaltenen Statusdaten im zweiten Format in die Statusdaten im ersten Format umwandelt und das Steuersignal einschließlich der umgewandelten Statusdaten an die elektronische Vorrichtung (400) überträgt.

## Revendications

1. Système de commande de dispositif électronique (1000) comprenant :
un dispositif électronique (400) commandé soit par une commande dans un premier format, soit par une commande dans un second format ;
un dispositif terminal (300) pour transmettre un signal de commande, comprenant des informations sur le dispositif et une commande, pour commander le dispositif électronique (400) à un serveur externe (200) ; et
**caractérisé en ce qu'**un serveur (100) est configuré pour :
sur la base de la réception du signal de commande provenant du serveur externe (200), identifier si le dispositif électronique (400) est un dispositif électronique (400) d'un type fonctionnant par une commande dans un premier format ou un dispositif électronique (400) d'un type fonctionnant par une commande dans un second format sur la base des informations de dispositif du dispositif électronique (400) incluses dans le signal de commande et des informations de dispositif stockées dans une partie de stockage du serveur (100),sur la base du dispositif électronique (400) identifié comme étant un type de dispositif électronique (400) fonctionnant par une commande dans le premier format, et le signal de commande incluant une commande dans le premier format, transmettre le signal de commande au dispositif électronique (400), et
sur la base du dispositif électronique (400) identifié comme étant un type de dispositif électronique (400) fonctionnant par une commande dans le second format, et le signal de commande incluant une commande dans le premier format, convertir la commande dans le premier format incluse dans le signal de commande dans le second format, et transmettre le signal de commande incluant la commande convertie au dispositif électronique (400),
dans lequel le dispositif électronique (400) transmet un signal de réponse pour le signal de commande au serveur (100), et
le serveur (100) est configuré pour :
sur la base du format d'une donnée d'état incluse dans le signal de réponse qui est un premier format, transmettre le signal de réponse au serveur externe (200), et sur la base du format d'une donnée d'état incluse dans le signal de réponse qui est un second format, convertir le format de la donnée d'état dans le premier format, et transmettre le signal de réponse incluant la donnée d'état convertie au serveur externe (200).

2. Système de commande de dispositif électronique (1000) de la revendication 1, dans lequel l'un des premier et second formats est un format conforme à une norme de l'Open Connectivity Foundation (OCF).

3. Système de commande de dispositif électronique (1000) de la revendication 1, dans lequel, sur la base des informations d'état du dispositif électronique (400) qui sont modifiées, le dispositif électronique (400) transmet les informations d'état modifiées au serveur (100), et
le serveur (100) est configuré pour :
déterminer le format des données d'état incluses dans les informations d'état,
sur la base des données d'état étant le premier format, transmettre les informations d'état au serveur externe (200), et
sur la base des données d'état étant le second format, convertir les données d'état dans le second format incluses dans les informations d'état dans le premier format, et transmettre les informations d'état incluant les données d'état converties au serveur externe (200).

4. Serveur (100) pour commander un dispositif électronique (400) comprenant :
un communicateur (110) pour transmettre et recevoir un signal de commande pour commander le dispositif électronique (400) ; et
**caractérisé en ce qu'**un processeur (120) est configuré pour :
sur la base de la réception du signal de commande, comprenant des informations de dispositif et une commande, provenant d'un serveur externe (200) par l'intermédiaire du communicateur, identifier si le dispositif électronique (400) est un dispositif électronique (400) d'un type fonctionnant par une commande dans un premier format ou un dispositif électronique (400) d'un type fonctionnant par une commande dans un second format sur la base des informations de dispositif du dispositif électronique (400) incluses dans le signal de commande et des informations de dispositif stockées dans une partie de stockage du serveur (100),
sur la base du dispositif électronique (400) identifié comme étant un type de dispositif électronique (400) fonctionnant par une commande dans un premier format, et le signal de commande comprenant une commande dans le premier format, commander le communicateur pour transmettre le signal de commande au dispositif électronique (400),
sur la base du dispositif électronique (400) identifié comme étant un type de dispositif électronique (400) fonctionnant par une commande dans un second format, et le signal de commande incluant une commande dans le premier format, convertir la commande dans le premier format incluse dans le signal de commande dans le second format, et commander le communicateur pour transmettre le signal de commande incluant la commande convertie au dispositif électronique,
sur la base de la réception d'un signal de réponse pour le signal de commande provenant du dispositif électronique (400), déterminer le format d'une donnée d'état incluse dans le signal de réponse,
sur la base des données d'état étant le premier format, commander le communicateur (110) pour transmettre le signal de réponse au serveur externe (200), et
sur la base des données d'état étant le second format, convertir le format des données d'état dans le premier format, et commander le communicateur (110) pour transmettre le signal de réponse comprenant les données d'état converties au serveur externe (200).

5. Le serveur (100) de la revendication 4,
dans lequel l'un des premier et second formats est un format conforme à une norme de l'Open Connectivity Foundation (OCF).

6. Le serveur (100) de la revendication 4, comprenant en outre :
une partie de stockage stockant une commande dans le second format appariée avec une commande dans le premier format,
dans lequel le processeur (120) est configuré pour :
sur la base de la commande stockée, déterminer une commande dans le second format correspondant à une commande dans le premier format inclus dans le signal de commande, convertir la commande dans le premier format inclus dans le signal de commande en la commande dans le second format, et transmettre le signal de commande incluant la commande convertie au dispositif électronique (400).

7. Le serveur (100) de la revendication 4,
dans lequel le processeur (120) est configuré pour :
sur la base d'informations d'état du dispositif électronique (400) qui sont modifiées, recevoir les informations d'état du dispositif électronique (400).

8. Le serveur (100) de la revendication 7, dans lequel le processeur (120) est configuré pour :
sur la base de la réception d'informations d'état du dispositif électronique (400) en provenance du dispositif électronique (400), déterminer le format des données d'état incluses dans les informations d'état,
sur la base des données d'état étant le premier format, commander le communicateur pour transmettre les informations d'état au serveur externe (200), et
sur la base des données d'état étant le second format, convertir les données d'état dans le second format incluses dans les informations d'état dans le premier format, et commander le communicateur pour transmettre les informations d'état incluant les données d'état converties au serveur externe (200).

9. Le serveur (100) de la revendication 7, comprenant en outre :
une partie de stockage stockant des données d'état dans le second format apparié avec des données d'état dans le premier format,
dans lequel le processeur (120) est configuré pour :
sur la base des données d'état stockées, déterminer une commande dans le premier format correspondant à une commande dans le second format inclus dans les informations d'état, convertir les données d'état dans le second format inclus dans les informations d'état en données d'état dans le premier format, et transmettre le signal de commande incluant les données d'état converties au dispositif électronique (400).
